# EUROPÄISCHE PATENTSCHRIFT

(11) **EP 1 663 560 B1**
(45) Veröffentlichungstag und Bekanntmachung des Hinweises auf die Patenterteilung: **24.12.2008**
(21) Anmeldenummer: 04741375.2
(22) Anmeldetag: 06.08.2004
(51) Int. Cl.: B23K 1/00, B23K 1/20

(54) **VERFAHREN UND VORRICHTUNG ZUR HERSTELLUNG EINES WABENKÖRPERS**
METHOD AND DEVICE FOR PRODUCING A HONEYCOMB BODY
PROCEDE ET DISPOSITIF DE PRODUCTION D'UN CORPS A NIDS D'ABEILLE

(30) Priorität: 21.08.2003 DE 10338360
(43) Veröffentlichungstag der Anmeldung: 07.06.2006
(73) Patentinhaber: Emitec Gesellschaft für Emissionstechnologie mbH, 53797 Lohmar (DE)
(72) Erfinder: ALTHÖFER, Kait, 51674 Wiehl (DE)
(74) Vertreter: Kahlhöfer, Hermann
(86) Internationale Anmeldenummer: PCT/EP2004/008804
(87) Internationale Veröffentlichungsnummer: WO 2005/021198

(56) Entgegenhaltungen:
- WO-A-03/055631
- US-A- 5 810 988
- US-B1- 6 371 360

## Beschreibung

Die vorliegende Erfindung betrifft ein Verfahren gemäß dem Oberbegriff des Anspruchs 1 und eine Vorrichtung gemäß dem Oberbegriff des Anspruchs 24 zur Herstellung von Wabenkörpern aus Lagen, wie sie insbesondere als Katalysator-Trägerkörper, Adsorber und/oder Filterkörper im Automobilbau eingesetzt werden (siehe US-A-6 371 360 und WO-A-03 055 631)

Aus Lagen, insbesondere metallischen Lagen gewickelte oder geschichtete und verwundene Wabenkörper sind in vielfältigen Formen bekannt. Man unterscheidet vor allem zwei typische Bauformen für aus Lagen aufgebaute Wabenkörper. Eine früh Bauform, für die die DE 29 02 779 A1 typische Beispiele zeigt, ist die spiralige Bauform, bei der im wesentlichen eine glatte und eine gewellte Blechlage aufeinandergelegt und spiralförmig aufgewickelt werden. Bei einer anderen Bauform wird der Wabenkörper aus einer Vielzahl von abwechselnd angeordneten glatten und gewellten oder unterschiedlich gewellten Blechlagen aufgebaut, wobei die Blechlagen zunächst einen oder mehrere Stapel bilden, die miteinander verschlungen werden. Dabei kommen die Enden aller Blechlagen außen zu liegen und können mit einem Gehäuse oder Mantelrohr verbunden werden, wodurch zahlreiche Verbindungen entstehen, die die Haltbarkeit des Wabenkörpers erhöhen. Typische Beispiele dieser Bauformen sind in der EP 0 245 737 B1 oder der WO 90/03220 beschrieben.

Um einen Wabenkörper herzustellen, müssen diese Lagen miteinander verbunden werden. Hierzu sind verschiedene Verbindungstechniken möglich. Am Markt große Bedeutung haben Hartlötverfahren gewonnen, bei denen die Lagen zumindest in Teilbereichen miteinander hartgelötet werden. Hierzu ist es erforderlich, ein zusätzliches Material, das Lotmaterial, welches einen niedrigeren Schmelzpunkt als die Lagen aufweist, in den Wabenkörper einzubringen. Durch Erhitzen des Wabenkörpers über den Schmelzpunkt des Lotmaterials schmilzt das Lot auf und verbindet bei Abkühlung die Lagen miteinander.

Das Lotmaterial kann in unterschiedlichen Formen in den Wabenkörper eingebracht werden, beispielsweise als Lotfolie oder Lotpulver. Lotfolie wird in den Bereichen, in denen Lagen miteinander verbunden werden sollen, eingelegt oder -geklebt, während Lotpulver entweder ohne ein Haftmittel in den Wabenkörper eingebracht oder mittels eines Haftmittels in bestimmten Teilbereichen des Wabenkörpers aufgetragen wird.

Wird das Lotpulver ohne Haftmittel in den Wabenkörper eingebracht, ist es praktisch nicht möglich, nur bestimmte, beispielsweise axial beabstandete Teilbereiche der Lagen miteinander zu verbinden. Wird eine lokal inhomogene Verbindung der Lagen untereinander, dass heißt eine Verbindung, die in Strömungsrichtung und/oder im wesentlichen quer zur Strömungsrichtung nicht durchgängig ist, oder auch der Lagen mit einem den Wabenkörper umschließenden Mantelrohr gewünscht, so ist bei Verwendung von Lotpulver das Auftragen eines Haftmittels nötig.

Zum Auftragen des Haftmittels sind verschiedene Techniken bekannt. Beispielsweise offenbart die EP 0 422 000 B2 den Auftrag eines Haftmittels mittels Walzen. Der Auftrag des Haftmittels erfolgt hier vor dem Wickeln bzw. Stapeln der Lagen. Weiterhin ist beispielsweise aus der DE 101 51 487 C1 bekannt, das Haftmittel in flüssiger Form unter Ausnutzung von Kapillarkräften bekannt. Hierbei wird der Wabenkörper nach dem Wickeln oder Stapeln und Verwinden der Lagen mit einem flüssigen Haftmittel in Kontakt gebracht, welches durch die Kapillarkräfte in die durch die Kontaktbereiche von Glatt- und Welllagen gebildeten Kapillaren aufsteigt.

Beide hier beschriebenen Verfahre weisen Nachteile auf. So ist der Auftrag des Haftmittels mittels Walzen relativ aufwendig, zudem ist insbesondere die relative Positionierung der Walzen in Bezug auf die mit Haftmittel zu versehenden Lagen fehleranfällig. Weiterhin erlaubt die Einbringung des Haftmittels mittels Kapillarkräften keine selektive Verbindung von benachbarten Lagen nur in Teilbereichen in einem genügend flexiblen Masse.

Hiervon ausgehend ist es Aufgabe der vorliegenden Erfindung, ein Verfahren und eine Vorrichtung zur Herstellung von Wabenkörpern bereitzustellen, bei dem/der eine Verbindung der Lagen auf einfache Weise auch in Teilbereichen der Lagen erfolgen kann.

Diese Aufgabe wird gelöst durch das Verfahren mit den Merkmalen des unabhängig formulierten Verfahrensanspruchs 1 und des unabhängig formulierten Vorrichtungsanspruchs 24 Vorteilhafte Weiterbildungen sind Gegenstand der jeweiligen abhängigen Ansprüche, wobei die dort aufgeführten Merkmale in beliebiger, technisch sinnvoller Weise miteinander kombiniert werden können und weitere Ausgestaltungen der Erfindung aufzeigen.

Das erfindungsgemäße Verfahren zur Herstellung eines Wabenkörpers aus Lagen, bevorzugt zumindest teilweise metallischen Lagen, umfasst dem nach zunächst die folgenden Schritte:
a) Bereitstellen von mindestens einer zumindest teilweise strukturierten Lage mit Strukturextrema und gegebenenfalls von mindestens einer im wesentlichen glatten Lage;
b) Auftragen von Haftmittel zumindest auf wenigstens einen Teilbereich der im wesentlichen glatten und/oder der zumindest teilweise strukturierten Lage;
c) Herstellung eines Wabenkörpers;
e) Durchführung eines thermischen Behandlungsschrittes,
wobei die Lage mit einem Lotmaterial versehen wird, welches im wesentlichen an den mit Haftmittel versehenen Teilbereichen der Lagen haften bleibt, wobei das Haftmittel in Tropfenform aufgetragen wird.

Dabei weisen die Haftmitteltropfen auf der Lage einen mittleren Durchmesser von 0,05 bis 0,7 mm, bevorzugt von 0,1 bis 0,4 mm, besonders bevorzugt von 0,1 bis 0,3 mm auf. Haftmittelpunkte bzw. -linien auf der Lage, die einen solchen Durchmesser bzw. eine solche Breite aufweisen, ermöglichen eine sehr genaue Definition der Bereiche, in denen benachbarte Lagen nach dem Löten verbunden sind.

Dies ermöglicht insbesondere den Auftrag des Haftmittels auf die zumindest teilweise strukturierten Folien zur Bildung von definierten Haftmitteltropfen benachbart zu den Strukturextrema, so dass das Auftragen einer breiten Haftmittelschicht auf den seitlichen Flanken verhindert werden kann.

Der Auftrag des Haftmittels in Tropfenform hat gegenüber dem Stand der Technik den Vorteil, dass dieser kontaktfrei erfolgen kann, d. h. ohne dass es zu einem mechanischen Kontakt zwischen den Mitteln zum Auftragen des Haftmittels und den Lagen kommen muss. Zum anderen erfolgt erfindungsgemäß der Auftrag des Haftmittels vor dem Wickeln oder Stapeln der Lagen, so dass es in vorteilhafter Weise möglich ist, nur Teilbereiche der Lagen mit Haftmittel zu versehen und später miteinander zu verbinden. So ist es möglich, Wabenkörper aufzubauen, die in einigen Teilbereichen miteinander verlötet sind, während sie in anderen Teilbereichen nicht miteinander verlötet sind, so dass also Wabenkörper mit inhomogener Verbindung in einfacher Weise realisiert werden können. So können in vorteilhafter Weise Wabenkörper hergestellt werden, die in Bezug auf ihre Elastizität inhomogen sind, also Teilbereiche aufweisen, die elastischer oder weniger elastisch als andere Teilbereiche sind. Beim Einsatz des Wabenkörpers im Abgassystem eines Kraftfahrzeugs können so Wabenkörper hergestellt werden, die an die speziellen Anforderungen eines bestimmten Abgassystems angepasst sind.

Insbesondere umfasst der Schritt c) das Stapeln mindestens einer zumindest teilweise strukturierten und mindestens einer im wesentlichen glatten Lage zu mindestens einem Stapel.

Dabei ist es bevorzugt, dass ein Schritt d) das Verwinden des mindestens einen Stapels von Lagen und/oder Aufwickeln mindestens einer zumindest teilweise strukturierten Lage und gegebenenfalls mindestens einer im wesentlichen glatten Lage zu einem Wabenkörper umfasst.

Weiter wird auch vorgeschlagen, dass der Wabenkörper nach Schritt b) und vor Schritt e) mit pulverförmigem Lotmaterial versehen wird. Auch der Auftrag des Lotmaterials in flüssiger Form, insbesondere in Tropfenform ist erfindungsgemäß möglich. Bevorzugt ist hierbei, dass die Tropfen von Lotmaterial die Tropfen Haftmittel auf den Lagen zumindest teilweise überdecken, bevorzugt möglichst großflächig überdecken. Es ist ferner auch möglich, im Schritt b) statt einem reinen Haftmittel eine .Lotpaste, insbesondere eine Mischung von pulverförmigem Lotmaterial und einem viskosen Haftmittel, in Tropfenform aufzutragen.

Weiterhin erlaubt der Auftrag des Haftmittels in Tropfenform eine örtliche Genauigkeit des Haftmittelauftrags, die zumindest in der Größenordnung der Tropfendurchmesser liegt, so dass eine örtlich sehr genaue Begrenzung der Teilbereiche der Lagen, auf die Haftmittel aufgetragen wird, erreicht werden kann.

Bei der Durchführung des thermischen Behandlungsschrittes kann es sich um einen Lötvorgang in einem Lötofen handeln, jedoch ist es genauso möglich, ein Aufheizen durch induktives Löten oder Strahlungslöten oder auch durch die Abwärme eines Schweißvorgangs zu erreichen.

Bei den verwendeten Haftmitteln handelt es sich bevorzugt um dünnflüssige Haftkleber, bevorzugt auf Basis eines polarisierbaren Lösungsmittels, insbesondere Wasser oder organische Lösungsmittel. Bevorzugt ist auch der Einsatz von bekannten und bewährten Haftmitteln zum Aufbau von Wabenkörpern.

Gemäß einer vorteilhaften Ausgestaltung des Verfahrens wird das Haftmittel auf einer zumindest teilweise strukturierten Lage im Bereich der Flanken der Strukturierungen, bevorzugt nahe einem Strukturextremum aufgetragen.

Wird beispielsweise ein Wabenkörper durch Wickeln einer im wesentlichen glatten und einer zumindest teilweise strukturierten Lage aufgebaut, so liegen nach dem Wickeln die Strukturextrema, also Strukturminima und Strukturmaxima, der zumindest teilweise strukturierten Lage an entsprechenden Bereichen der im wesentlichen glatten Lagen an. Die Anlageflächen bilden die Kontaktbereiche zwischen den Lagen, in denen später eine Lötverbindung ausgebildet werden soll. Dies erfolgt durch Einbringen von Lotpulver in der Nähe der Strukturextrema, so dass sich beim Löten mindestens einer, bevorzugt zwei Lötzwickel benachbart zu den Strukturextrema ausbilden. Diese Lötzwickel können beispielsweise näherungsweise dreiecksförmig sein. Wird das Haftmittel vor dem Wickeln bzw. Verwinden der Lagen und das Lotmittel nach dem Wickeln bzw. Verwinden der Lagen in den Wabenkörper eingebracht, so bilden sich Lötzwickel direkt benachbart zu den Strukturextrema aus, während das Strukturextremun selbst jedoch nicht zur Lötverbindung zwischen den Lagen beiträgt.

Erfindungsgemäß wird das Haftmittel nahe einem Strukturextremum insbesondere auf die flanken der Strukturierungen aufgetragen, so erfolgt einerseits bei Belotung ein Anhaften des Lotpulvers genau in den Bereichen, die später verbunden werden sollen und andererseits erfolgt kein Haftmittelauftrag auf dem Strukturextremum selber. Beim Aufwickeln des Wabenkörpers oder auch beim Verwinden von einem oder mehreren Stapeln von Lagen kommt es zu Relativbewegungen zwischen der im wesentlichen glatten und der zumindest teilweise strukturierten Lage. Hierbei gleiten die beiden Lagen im wesentlichen auf den Strukturextrema. Liegt nun auf dem Strukturextremum Leim auf, so wird diese Relativbewegung behindert und dadurch das Wickeln bzw. Verwinden erschwert. Somit bedingt ein Auftrag des Haftmittels auf den Flanken der Strukturierung eine verbesserte Wickel- bzw. Verwindungsfähigkeit, wobei die Anbindung der Lagen aneinander trotzdem mit hoher Zuverlässigkeit erreicht wird.

Gemäß einer weiteren vorteilhaften Ausgestaltung des Verfahrens wird das Haftmittel aufgedruckt. Hierbei ist es besonders bevorzugt, das Haftmittel nach einem Drop-on-Demand-Verfahren, einem Bubble-Jet-Verfahren und/oder einem Continuous-Inkjet-Verfahren aufzutragen.

Drop-on-Demand-Verfahren sind Druckverfahren, die sich dadurch auszeichnen, dass ein Tropfen des Haftmittels nur dann erzeugt wird, wenn ein bestimmter Punkt der Lagen bedruckt werden soll. Betrachtet man eine Druckeinrichtung, die einen Haftmitteltropfen emittieren kann und den entsprechenden Bereich der Lage, auf welcher dieser Haftmitteltropfen aufgetragen werden kann, so wird also ein Haftmitteltropfen nur dann erzeugt, wenn der entsprechende Bereich der Lage mit Haftmittel versehen werden soll. Soll kein Haftmittel aufgetragen werden, wird auch kein Haftmitteltropfen erzeugt.

Im Gegensatz dazu existieren auch kontinuierliche Druckverfahren, bei denen ein kontinuierlicher Strahl von Hafmitteltropfen erzeugt wird, der dann, wenn ein Bereich nicht bedruckt werden soll, über eine Ablenkung in ein Auffangmittel geführt wird und dann nicht auf die zu bedruckende Oberfläche gelangt.

Bei Drop-on-Demand-Systemen ist es beispielsweise möglich, einzelne Tropfen des Haftmittel mittels piezoelektrischer Aktoren zu erzeugen. Bei piezoelektrischen Aktoren handelt es sich um elektromechanische Wandler, die auf dem piezoelektrischen Effekt beruhen. Hierbei führt die Anlage einer Wechselspannung an das piezoelektrische Element zu mechanischen Schwingungen. Wird als piezoelektrischer Wandler eine Düse betrieben, die mit dem zu druckenden Stoff beaufschlagt ist, so entstehen durch diese mechanischen Schwingungen Tropfen des zu druckenden Materials, die die Düse mit einer relativ hohen Geschwindigkeit verlassen. Diese Tropfen treffen auf das zu bedruckende Material auf und bleiben dort haften. Durch Positionierung der Druckeinrichtung, die beispielsweise die eben beschriebenen piezoelektrischen Aktor enthält, ist es möglich, bestimmte Teilbereiche der Lage zu bedrucken und bestimmte Teilbereiche nicht zu bedrucken. Es sind mehrere Drop-on-Demand-Verfahren bekannt, die auf piezoelektrischen Wandlern beruhen. Nur als Beispiele seien Piezoröhrchen, Piezoscheiben, und Piezolamellen erwähnt.

Ein weiteres Drop-on-Demand-Verfahren stellt das Bubble-Jet-Verfahren dar. Hierbei werden die Haftmitteltropfen nicht mittels eines piezoelektrischen Wandlers erzeugt, sondern durch Einsatz von thermischen Aktoren. Es handelt sich hierbei um Heizelemente, die in einer Düse ausgebildet sind, die mit dem zu druckenden Material, also dem Haftmittel, beaufschlagt sind. Durch diese Heizelemente wird kurzzeitig in der Düse lokal eine Temperatur erzeugt, die deutlich über der Siedetemperatur des Haftmittels ist. Das Haftmittel beginnt lokal als Film zu sieden, worauf sich nach kurzer Zeit eine geschlossene Dampfblase bildet. Diese Dampfblase treibt einen Tropfen des zu druckenden Stoffes aus der Düse, wobei Drücke von 10 bar oder mehr und Austrittsgeschwindigkeiten von 10 m/sec und mehr erreicht werden können. Die Dampfblase kollabiert daran anschließend, worauf es aufgrund der Kapillarkräfte zum Nachsaugen von Haftmittel kommt. Bei solchen Bubble-Jet-Verfahren werden verschiedene Drucktechniken unterschieden, die allgemein als Edge- und Sideshooter bekannt sind.

Bei dem Continuous-Inkjet-Verfahren handelt es sich um ein bekanntes Druckverfahren, bei dem ein kontinuierlicher Strahl von Tintentropfen erzeugt wird, welcher durch Positionierung des Druckkopfes und/oder elektrostatische Auslenkung ein Druck in vorbestimmten Teilbereichen erfolgt.

Wenn ein solches Continuous-Inkjet-Verfahren zum Auftragen von Haftmittel verwendet wird, wird ein kontinuierlicher Strahl von Haftmitteltropfen erzeugt, der auf die mit Haftmittel zu versehenden Teilbereiche der Lagen gelenkt wird. Die Haftmitteltropfen bleiben daraufhin an der Lage haften. Insbesondere die elektrostatische Auslenkung erlaubt in vorteilhafter Weise nicht nur das Drucken von Punkten, sondern auch das Drucken von sich überlappenden Punkten, die im Idealfall Linien bilden.

Gemäß einer vorteilhaften Ausgestaltung des Verfahrens wird das Haftmittel durch eine Düse appliziert, welche impulsangeregt wird. Impulsangeregt bedeutet in diesem Zusammenhang, dass keine hochfrequente Schwingung der Düse erzeugt wird sondern diese vielmehr dann, wenn ein Haftmitteltropfen durch die Düse ausgestoßen werden soll, die Düse über einen einzelnen Impuls angeregt wird. Eine solche Impulsanregung kann beispielsweise durch einen elektrischen Spannungspuls an einem mit der Düse verbundenen piezoelektrischen Element oder durch einen Wärmeimpuls an ein entsprechendes Heizelement erzeugt werden. Bei einer Impulsanregung erfolgt also eine Anregung der Düse nur dann, wenn ein Haftmitteltropfen zum Auftrag auf die Lage benötigt wird.

Gemäß einer vorteilhaften Ausgestaltung des Verfahrens wird das Haftmittel durch eine Düse appliziert, welche zu hochfrequenten Schwingungen angeregt wird. Die Schwingungsanregung der Düse unterscheidet sich bei einem Continuous-Inkjet-Verfahren von einem Drop-on-Demand-Verfahren dadurch, dass diese Anregung beständig erfolgt, so dass ein kontinuierlicher Strahl von Haftmitteltropfen erzeugt wird. Sollen bestimmte Teilbereiche nicht bedruckt werden, auf die ohne weitere Maßnahmen nun der Haftmitteltropfenstrahl treffen würde, so muss durch Ablenkmittel gewährleistet sein, dass diese Haftmitteltropfen nicht die Lagen erreichen, sondern vorher abgefangen werden. Unter hochfrequenten Schwingungen sind insbesondere Schwingungen einer Frequenz von mehr als 10 kHz, bevorzugt mehr als 50 kHz, besonders bevorzugt 100 kHz und mehr zu verstehen.

Gemäß einer weiteren vorteilhaften Ausgestaltung des Verfahrens wird das Haftmittel in der Düse einen Druck von mehr als 2 bar, bevorzugt mehr als 2,5 bar auf.

Gemäß einer weiteren vorteilhaften Ausgestaltung des Verfahrens erfolgt die Anregung der Düse mittels eines piezoelektrischen Elements. Hierbei erfolgt die Anregung über das piezoelektrische Element beispielsweise im Fall eines Drop-on-Demand-Systems über eine impulsartige Anregung des piezoelektrischen Elementes und im Falle eines Continuous-Inkjet-Verfahrens über eine dauerhafte hochfrequente Anregung des piezoelektrischen Elementes.

Gemäß einer vorteilhaften Ausgestaltung des Verfahrens erfolgt die Anregung bei einer Frequenz von mindestens 50 kHz, bevorzugt mindestens 60 kHz, besonders bevorzugt mindestens 100 kHz. Solche hochfrequenten Anregungen erlauben bei einem Continuous-Inkjet-System einen sehr schnellen und zügigen Auftrag des Haftmittels auf die zu verbindenden Bereiche der Lagen. So können hohe Fertigungsgeschwindigkeiten erreicht werden, die eine Fertigung eines Wabenkörpers bei sehr kurzer Taktzeit ermöglichen.

Gemäß einer weiteren vorteilhaften Ausgestaltung des Verfahrens werden die Haftmitteltropfen elektrostatisch aufgeladen und elektrostatisch abgelenkt. So kann neben oder alternativ zu einer mechanischen Auslenkung des Druckkopfes noch eine Feinauslenkung des Strahls erfolgen, um besonders genau definierte Haftmittelaufträge zu erreichen.

Gemäß einer weiteren vorteilhaften Ausgestaltung des Verfahrens werden Haftmitteltropfen, die nicht auf die Lage aufgetragen werden sollen, elektrostatisch in ein Auffangmittel gelenkt und rückgeführt. In vorteilhafter Weise ist es so möglich, Tropfen, die nicht auf die Lagen aufgetragen werden sollen, abzulenken, aufzufangen und dann in ein Hanmittelreservoir rückzuführen. So kann in vorteilhafter Weise der Verbrauch von Haftmittel reduziert werden.

Gemäß einer vorteilhaften Ausgestaltung des Verfahrens wird die Positionierung des Haftmittels auf den Lagen zumindest zum Teil durch eine gezielte elektrostatische Ablenkung der Haftmitteltropfen vor Auftreffen auf die Lagen erreicht. Dies ermöglicht in vorteilhafter Weise eine sehr präzise Positionierung der Haftmitteltropfen auf der Lage. Ein reine Positionierung des Haftmittels auf den Lagen durch elektrostatische Ablenkung ist möglich und erfindungsgemäß. Eine solche kann sehr präzise und schnell erfolgen, so dass die Herstellung von Wabenkörpern in hoher Qualität bei kurzen Produktionszeiten möglich ist.

Gemäß einer weiteren vorteilhaften Ausgestaltung des Verfahrens werden die Haftmitteltropfen durch kurzzeitiges Erhitzen des Haftmittels über dessen Siedepunkt in einer Düse erzeugt. Das Haftmittel füllt hierbei eine dünne Düse kontinuierlich aus, ein kurzzeitiges Erhitzen über den Siedepunkt führt zur Entstehung einer Dampfblase, die einen Haftmitteltropfen aus der Düse herausschleudert. Dieser Haftmitteltropfen kann zum Auftrag des Haftmittels auf die Lage verwendet werden.

Gemäß einer weiteren vorteilhaften Ausgestaltung des Verfahrens ist zumindest ein Teil der Lagen als metallische Lagen, bevorzugt Blechlagen und/oder metallische Faserlagen ausgebildet. Der Aufbau von erfindungsgemäßen Wabenkörpern aus metallischen Lagen, insbesondere aus Blechlagen und/oder metallischen Faserlagen führt in vorteilhafter Weise zur Ausbildung von sehr dauerhaltbaren und hitzebeständigen Wabenkörpern. Diese können als Katalysator-Trägerkörper zur Umsetzung von zumindest Teilen des Abgases eines Automobils dienen. Weiterhin können solche Wabenkörper auch als Trägerstrukturen für Adsorberbeschichtungen verwendet werden, also beispielsweise der Speicherung von Kohlenwasserstoffen dienen oder im Abgassystem eines Automobils z. B. eine oder mehrere Komponenten des Abgases speichern und zu einem anderen Zeitpunkt wieder abgeben. Beispielsweise sind solche Adsorber zur zwischenzeitlichen Speicherung von Stickoxiden (NOₓ) bekannt. Ein weiteres Einsatzgebiet solcher Wabenkörper ist als Filterkörper im Automobilbau, beispielsweise zum Abfiltern von Partikeln. Solche Partikelfilter können offen oder geschlossen ausgebildet sein, wobei bei einem offenen Partikelfilter Teilchen, die größer sind als die Porengrößen der Filtermaterialien durch den Filter durchgehen können, während dies ist bei geschlossenen Filtersystemen nicht der Fall ist. Es ist auch möglich und erfindungsgemäß, metallische Faserlagen mit Blechstreifen zu verstärken.

Gemäß einer weiteren vorteilhaften Ausgestaltung des erfindungsgemäßen Verfahrens ist zumindest ein Teil der Lagen aus Kompositmaterial, bevorzugt einem Kompositmaterial aus keramischen Fasern und metallischem Material, bevorzugt metallischen Fasern und/oder Blechlagen, ausgebildet. In vorteilhafter Weise ist es so möglich, Kompositmaterialien beispielsweise in Filterkörper einzusetzen, die aus keramischen Fasern und/oder metallischen Fasern bestehen und die ggf. durch aufgebrachte und mit dem Fasermaterial verbundene Blechlagen verstärkt werden können. Genauso gut ist es möglich, einen Teilbereich der Lage aus einer Blechlage und einen anderen Teilbereich der Lage aus einer keramischen Faserlage auszubilden.

Gemäß einer weiteren vorteilhaften Ausgestaltung des Verfahrens erfolgt das Auftragen des Haftmittels bevorzugt in einer Auftragrichtung, die im wesentlichen senkrecht zur Bewegungsrichtung der Lagen ist.

Gemäß einer weiteren vorteilhaften Ausgestaltung des Verfahrens erfolgt das Auftragen des Haftmittels bevorzugt in einer Auftragsrichtung, die im wesentlichen senkrecht zu einer Oberfläche des wenigstens einen mit Haftmittel zu versehenden Teilbereichs ist. Dies ermöglicht insbesondere bei Auftrag des Haftmittels auf die zumindest teilweise strukturierten Folien die Bildung von definierten Haftmitteltropfen benachbart zu den Strukturextrema, so dass das Auftragen einer breiten Haftmittelschicht auf den seitlichen Flanken verhindert werden kann.

Gemäß einem weiteren Aspekt des erfinderischen Gedankens wird eine Vorrichtung zum Herstellen von Wabenkörpern vorgeschlagen, die zumindest die folgenden Komponenten umfasst:
a) Mittel zum Bereitstellen von mindestens einer zumindest teilweise strukturierten Lage mit Strukturextrema und gegebenenfalls von mindestens einer im wesentlichen glatten Lage;
b) Mittel zum Auftragen von Haftmittel zumindest auf wenigstens einen Teilbereich der im wesentlichen glatten und/oder der zumindest teilweise strukturierten Lage;
c) Mittel zur Generierung eines Wabenkörpers;
e) Belotungsmittel, mittels derer der Wabenkörper mit Lot versehen werden kann, welches im wesentlichen an den mit Haftmittel versehen Bereichen haften bleibt; und
f) Behandlungsmittel zur Durchführung eines thermischen Behandlungsschrittes,
dadurch gekennzeichnet, dass die Mittel zum Auftragen eines Haftmittels mindestens eine Druckeinrichtung zum Aufdrucken des Haftmittels auf Teilbereiche der Lage, ein Haftmittelreservoir und Zuleitungsmittel für die Zuleitung von Haftmittel zur Druckeinrichtung umfassen, und dass die Mittel zum Auftragen dazu geeignet sind, das Haftmittel benachbart zu Strukturextrema der zumindest teilweise strukturierten Lage aufzutragen, wobei auf den Strukturextrema selbst kein Haftmittel auf trag erfolgt.

Insbesondere umfasst die Komponente c) Stapelmittel, mit denen mindestens eine zumindest teilweise strukturierte und mindestens eine im wesentlichen glatten Lage zu mindestens einem Stapel gestapelt werden.

Bevorzugt ist zudem eine Komponente d) vorgesehen, die Verwindungsmittel zum Verwinden des mindestens einen Stapels von metallischen Lagen und/oder Aufwickelmittel zum Aufwickeln mindestens einer zumindest teilweise strukturierten Lage und gegebenenfalls mindestens einer im wesentlichen glatten Lage zu einem Wabenkörper umfasst.

Die erfindungsgemäße Vorrichtung ermöglicht in vorteilhafter Weise das Auftragen von Haftmittel zur Fixierung von Lotmittel auf Lagen zum Aufbau eines Wabenkörpers mittels einer Drucktechnik. Hierbei kann mittels der Druckeinrichtung ein Auftrag von Haftmittel sowohl auf die im wesentlichen glatten, als auch auf die zumindest teilweise strukturierten Lagen erfolgen.

Unter Lagen sind hier insbesondere metallische Lagen und/oder Lagen aus Kompositmaterial zu verstehen.

Gemäß einer vorteilhaften Ausgestaltung der erfindungsgemäßen Vorrichtung ist die Druckeinrichtung eine Drop-on-Demand-Druckeinrichtung.

Gemäß einer weiteren vorteilhaften Ausgestaltung der Vorrichtung ist die Druckeinrichtung eine Bubble-Jet-Druckeinrichtung.

Gemäß einer weiteren vorteilhaften Ausgestaltung der Vorrichtung ist die Druckeinrichtung eine Continuous-Inkjet-Druckeinrichtung.

Alle diese drei Druckeinrichtungen erlauben prinzipiell in sehr einfacher Weise den Auftrag von Haftmittel. Bei den solchen Druckeinrichtungen zugrundeliegenden Druckverfahren handelt es sich um sogenannte Tinten- oder Tintenstrahlverfahren.

Gemäß einer weiteren vorteilhaften Ausgestaltung der Vorrichtung weist die Druckeinrichtung eine Düse zum Auftragen des Haftmittels auf, die zu hochfrequenten oder impulsartigen Schwingungen anregbar ist. Eine hochfrequent oder impulsartig angeregte Düse erlaubt in vorteilhafter Weise mit einer entsprechenden Druckeinrichtung die Erzeugung von einzelnen Haftmitteltropfen oder Haftmitteltropfstrahlen, die auf die zu bedruckenden Teilbereiche der metallischen Lagen aufgetragen werden können.

Gemäß einer weiteren vorteilhaften Ausgestaltung der erfindungsgemäßen Vorrichtung weist die Düse ein piezoelektrisches Element auf. Ein piezoelektrisches Element ist ein Element, das nach dem piezoelektrischen Effekt arbeitet. D. h., eine an diesem Element anliegende elektrische Wechselspannung wird in Schwingungen umgewandelt. Hierbei kann entweder eine impulsartige Anregung durch einen Spannungsstoß erfolgen oder aber eine hochfrequente Schwingung erzeugt werden, indem eine hochfrequente Wechselspannung an das piezoelektrische Element angelegt wird.

Gemäß einer weiteren vorteilhaften Ausgestaltung der erfindungsgemäßen Vorrichtung weist die Druckeinrichtung Auflademittel zur elektrostatischen Aufladung des Haftmittels und Ablenkmittel zur Ablenkung des Haftmittels auf.

Hierbei ist es besonders vorteilhaft, auch die Ablenkmittel in elektrostatischer Art und Weise auszubilden, also eine Ablenkung der elektrostatisch aufgeladenen Tropfen des Haftmittels durch ein elektrostatisches Feld zu erzeugen.

Gemäß einer weiteren vorteilhaften Ausgestaltung der Vorrichtung umfassen die Mittel zum Auftragen von Haftmittel Auffangmittel zum Auffangen nicht aufgetragenen Haftmittels.

Im Falle eines Tintenstrahlverfahrens wie beispielsweise des Continuous-Inkjet-Verfahrens und entsprechend ausgebildeter Druckeinrichtungen ist es nötig, Haftmitteltropfen, die nicht auf die Oberfläche der metallischen Lagen gelangen sollen, aufzufangen. Beispielsweise ist es so möglich, nur bestimmte Teilbereiche einer Lage mit Haftmittel zu versehen. So könnte es beispielsweise vorteilhaft sein, die Flanken der Strukturen der zumindest teilweise strukturierten Lagen mit Haftmittel zu bedrucken. Hierzu wäre eine Druckeinrichtung vorteilhaft, deren Länge der Länge der Strukturen der zumindest teilweise strukturierten Lagen entspricht. Wenn nun nicht die Strukturen über die gesamte Länge bedruckt werden sollen, sondern nur in Teilbereichen, so ist es nötig, einige der Tropfen, die die Bereiche treffen würden, in denen kein Haftmittelauftrag nötig ist, aufzufangen. Dies geschieht mittels der Auffangmittel. Das aufgefangene Haftmittel wird gemäß einer weiteren vorteilhaften Ausgestaltung der Vorrichtung durch Rückführmittel, die in dem Mittel zum Auftragen von Haftmittel umfasst sind, zum Haftmittelreservoir zurückgeführt.

Alle im Zusammenhang mit dem erfindungsgemäßen Verfahren offenbarten Details und Vorteile sind gleichermaßen vorteilhaft für die erfindungsgemäße Vorrichtung und umgekehrt.

Im folgenden werden weitere Vorteile und bevorzugte Ausführungsformen anhand der Zeichnung beschrieben, wobei die Erfindung nicht auf die in der Zeichnung gezeigten Details beschränkt ist. Es zeigen:
- Fig. 1: schematisch den Verfahrensschritt des Auftragens des Haftmittels;
- Fig. 2: schematisch den Aufbau von Mitteln zum Auftragen von Haftmittel;
- Fig.3: schematisch ein weiteres Ausführungsbeispiel zur Haftmitteltropfenerzeugung;
- Fig. 4: schematisch Details eines Haftmittelauftrages einer bevorzugten Ausführungsform des erfindungsgemäßen Verfahrens;
- Fig. 5: exemplarisch zwei verbundene Lagen;
- Fig. 6: schematisch eine erfindungsgemäße Vorrichtung zur Herstellung von Wabenkörpern;
- Fig. 7: Beispiele eines möglichen Haftmittelauftrags am Beispiel eines spiralförmigen Wabenkörpers; und
- Fig.8: schematisch Details eines Haftmittelauftrages einer weiteren bevorzugten Ausführungsform des erfindungsgemäßen Verfahrens.

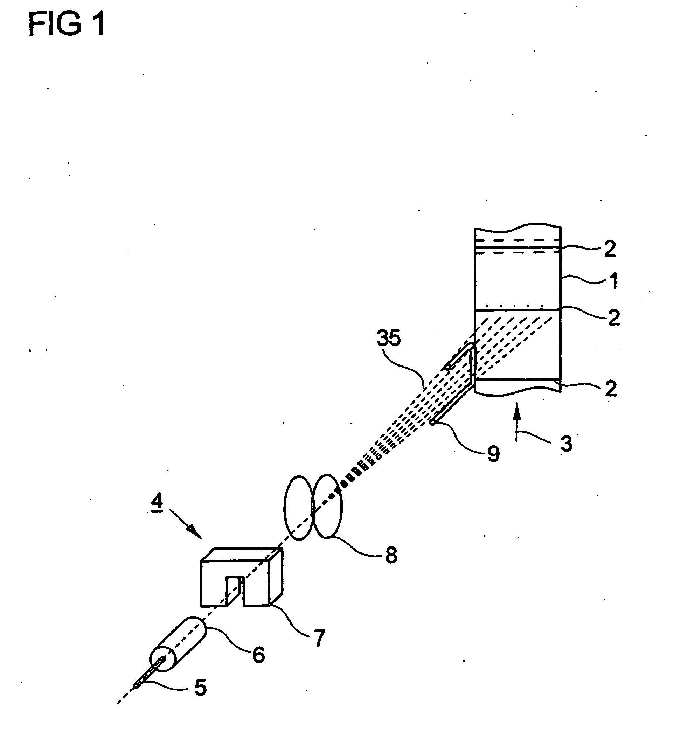

Fig. 1 zeigt schematisch prinzipiell den Verfahrensschritt einer Auftragung von Haftmittel auf eine Lage, aus der zusammen mit anderen Lagen später ein Wabenkörper hergestellt werden soll. Eine solche Lage, insbesondere eine zumindest teilweise strukturierte Lage 1 mit symbolisch angedeuteten Strukturextrema 2, also Strukturminima und Strukturmaxima, wird in einer Bewegungsrichtung 3 relativ zu Mitteln 4 zum Auftragen von Haftmitteln bewegt. Die Mittel 4 zum Auftragen von Haftmittel umfassen ein piezoelektrisches Element 5, eine Düse 6, Auflademittel 7, Ablenkmittel 8, und Auffangmittel 9.

Hierbei wird die Düse 6 mit dem Haftmittel unter einem Druck von 2,5 bar oder mehr beaufschlagt. Die Düse 6 wird durch das piezoelektrische Element 5, an welchem eine hochfrequente Wechselspannung anliegt, in Schwingung versetzt. Hierbei sind bevorzugt Schwingungsfrequenzen von mehr als 50 kHz, bevorzugt mehr als 60 kHz, besonders bevorzugt 100 kHz und mehr. Hierdurch verlässt ein kontinuierlicher Strahl von Haftmitteltropfen die Düse 6. Dieser Tropfenstrahl 35 wird im Auflademittel 7 elektrostatisch aufgeladen. Die so elektrostatisch aufgeladenen Haftmitteltropfen werden durch die Ablenkmittel 8 durch Anlegen eines elektrostatischen Feldes abgelenkt. In Fig. 1 ist der Tropfenstrahl 35 bei verschiedenen Ablenkung gezeigt. Hierdurch können nicht nur Haftmittelpunkte 10 auf der Lage 1 erzeugt werden, sondern auch Haftmittelstriche 11. Besonders bevorzugt wird das Haftmittel, also die Haftmittelpunkte 10 oder Haftmittelstriche 11, direkt benachbart zu einem Strukturextremum 2 aufgetragen. Hiermit liegt der Haftmittelauftrag noch im Bereich der Kuppe der Strukturierung und nicht im Bereich der seitlichen Flanke der Strukturierung, sondern direkt benachbart dem Strukturextremum 2. Dies führt beim späteren Wickeln aus zumindest teilweise strukturierten Lagen 1 und im wesentlichen glatten Lagen dazu, dass das Strukturextremum 2, mit dem die zumindest teilweise strukturierte Lage 1 über die im wesentlichen glatte Lage rutscht, nicht mit Haftmittel versehen ist, so dass die Gleitreibung im Vergleich zum Wickeln mit auf den Strukturextrema 2 aufgetragenem Leim verringert wird.

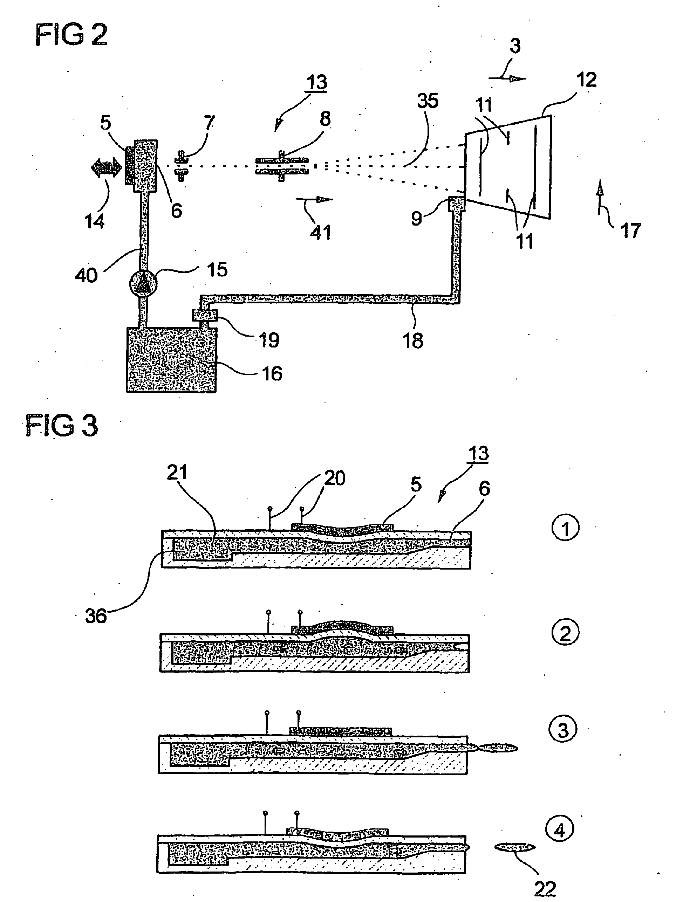

Fig. 2 zeigt schematisch ein weiteres Ausführungsbeispiel der Mittel 4 zum Auftragen von Haftmittel. Hierbei wird eine im wesentlichen glatte Lage 12 in der Bewegungsrichtung 3 an einer Druckeinrichtung 13 vorbeibewegt, durch die Haftmittel 36 in Form eines Tropfenstrahls 35 in einer Auftragrichtung 41 auf aufgetragen werden. Hierbei ist die Auftragrichtung 41 im wesentlichen senkrecht zur Bewegungsrichtung 3 der Lage 12. Die Druckeinrichtung 13 umfasst ein piezoelektrisches Element 5, Auflademittel 7, Ablenkmittel 8 und Auffangmittel 9. Das piezoelektrische Element 5 wird mit einer hochfrequenten Wechselspannung betrieben, die zu einer Schwingung des piezoelektrischen Elementes 5 in Schwingungsrichtung 14 führt. Mittels der Hochdruckpumpe 15 wird Haftmittel aus einem Haftmittelreservoir 16 durch Zuleitungsmittel 40 unter Hochdruck auf eine Düse 6 gegeben. Durch die Schwingungen des piezoelektrischen Elementes 5 wird daraus ein hochfrequenter kontinuierlicher oder quasikontinuierlicher Tropfenstrahl 35 erzeugt. Diese Tropfen 35 werden in den Auflademitteln 7 elektrostatisch aufgeladen und in den Ablenkmitteln 8 elektrostatisch abgelenkt. In Fig. 2 ist der Tropfenstrahl 35 bei unterschiedlichen Auslenkungen gezeigt. Die Auslenkung erfolgt durch Anlegen jeweiliger Spannungen an die Ablenkmittel 8 und die Auflademittel 7. Hierdurch kann der Tropfenstrahl 35 relativ zur Lage 1, 12 bewegt werden. Im vorliegenden Ausführungsbeispiel werden Haftmittelstriche 11 auf einer im wesentlichen glatten Blechlage 12, welche perspektivisch eingezeichnet ist, erzeugt. Hierbei können ganz unterschiedliche Längen der Haftmittelstriche 11 erzeugt werden. Es ist möglich, Haftmittelstriche 11 in Bezug auf eine Querrichtung 17, die quer zur Bewegungsrichtung 3 verläuft, in verschiedenen Längen und an verschiedenen Positionen in Bezug auf die Querrichtung 17 zu erzeugen. Dies geschieht durch Anlegen einer entsprechenden Wechselspannung an die Ablenkmittel 8. Sofern kein durchgehender Haftmittelstrich 11 erzeugt werden soll, müssen Tropfen, die zwischen den Teilstrichen auftreffen würden, in Auffangmittel 9 abgelenkt werden. Hierdurch treffen diese Haftmitteltropfen nicht auf der Lage 1, 12 auf. Die im Auffangmittel 9 aufgefangenen Haftmitteltropfen werden über die Rückführmittel 18 und ggf. Filter 19 in das Haftmittelreservoir 16 zurückgeführt.

Die hier offenbarten Möglichkeiten des Haftmittelauftrags auf im wesentlichen glatten Lagen 12 gelten genauso für zumindest teilweise strukturierte Lagen 1.

Bei dem in Fig. 1 und 2 gezeigten Beispiel handelt es sich im wesentlichen um ein Mittel 4 zum Auftragen von Haftmittel, welches nach dem Continuous-Inkjet-Verfahren arbeitet. In dem in Fig. 3 gezeigten zweiten Ausführungsbeispiel handelt es sich um eine Druckeinrichtung 13, die nach dem Drop-on-Demand-System arbeitet. Bei einem solchen System wird keine kontinuierliche hochfrequente Schwingung einer Düse und damit ein quasi kontinuierlicher Tropfenstrahl erzeugt, vielmehr werden einzelne Tropfen 22 durch Einzelimpulse erzeugt. In Fig. 3 ist dieselbe Druckeinrichtung 13 zu unterschiedlichen Zeiten 1 bis 4 gezeigt. Die Druckeinrichtung 13 umfasst ein piezoelektrisches Element 5, welches über Kontakte 20 mit einem elektrischen Spannungsimpuls versehen werden kann. Zu vier verschiedenen Zeiten 1 bis 4 wird die Erzeugung von Tropfen schematisch gezeigt. Zum Zeitpunkt 1 befindet sich das piezoelektrische Element 5 in Ruhestellung. Düse 6 und Zuführleitung 21 sind mit Haftmittel 36 gefüllt. In Schritt 2 wird über die Kontakte 20 ein Spannungsimpuls auf das piezoelektrische Element 5 gegeben, was zu einer Auslenkung des piezoelektrischen Elementes 5 führt. Hierdurch bedingt erfolgt eine Bewegung des Haftmittels 36 wie durch die beiden Pfeile symbolisiert. In Schritt 3 ist der Spannungsimpuls im piezoelektrischen Element 5 wieder abgebaut, so dass sich dieses bereits zumindest teilweise rückverformt hat. Dies führt zu einer Bewegung des Haftmittels 36, wie durch Pfeile angedeutet. In Schritt 3 wird ein Tropfen 22 ausgestoßen, der jedoch noch nicht von dem Haftmittel 36 in der Düse 6 getrennt ist. Dies erfolgt erst im Schritt 4, in dem das piezoelektrische Element 5 sich wieder in der Ruhestellung wie zum Zeitpunkt 1 befindet. Ein abgelöster Haftmitteltropfen 22 verlässt die Düse 6. Durch Verwendung einer Vielzahl solcher Druckeinheiten 13 ist es möglich, bei entsprechender Dimensionierung des Abstandes der Düse 6 zur Lage 1, 12 und Berücksichtigung eines entsprechenden Überlapps einzelner Druckeinheiten 13 eine Linie auf der Lage 1, 12 zu drucken, die aus Haftmittel 35 besteht. Hierbei können Lücken in diesen Linien dadurch erzeugt werden, dass einzelne Druckeinrichtungen 13 zu einem bestimmten Zeitpunkt nicht betätigt werden und somit keinen Haftmitteltropfen 22 emittieren, während andere Druckeinheiten 13 betrieben werden und Haftmitteltropfen 22 emittieren.

Ein weiteres Verfahren stellt das Bubble-Jet-Verfahren dar, bei dem mittels eines kurzzeitigen Aufheizens der Düse 6 ein siedender Film des Haftmittels 36 erzeugt wird. Dieser erzeugt eine Dampfblase, die einen Tropfen 22 Haftmittel 36 aus der Düse 6 herausschleudert. Das Verfahren ist aus dem Stand der Technik bekannt und stellt gleichzeitig ein Drop-on-Demand-Verfahren dar.

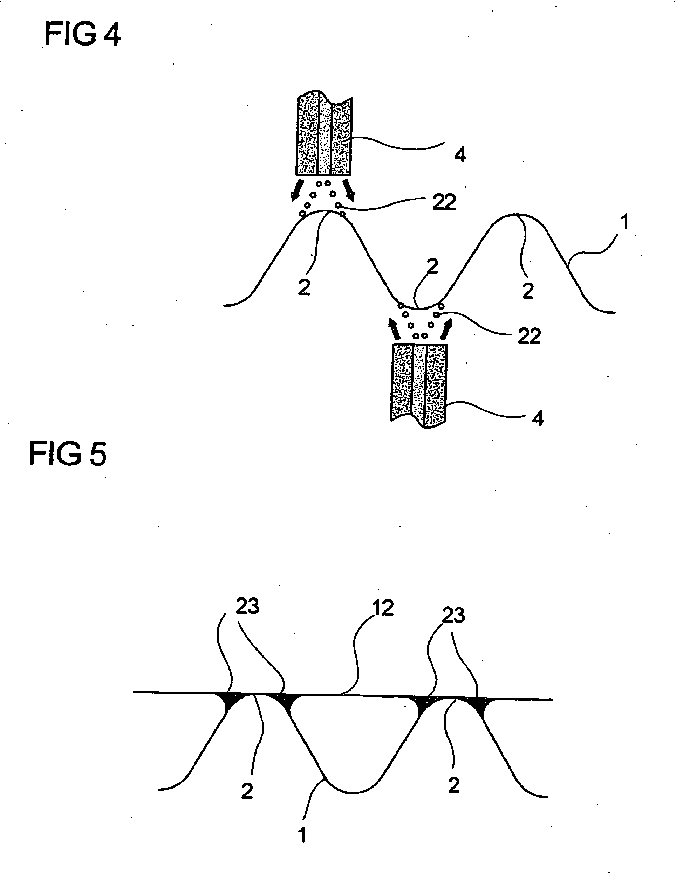

Fig. 4 zeigt schematisch die Details eines Haflmittelauftrages einer bevorzugten Ausführungsform des erfindungsgemäßen Verfahrens. Hierbei wird Haftmittel in Form von Haftmitteltropfen 22 auf eine zumindest teilweise strukturierte Lage 1 aufgetragen. Die zumindest teilweise strukturierte Lage 1 ist im vorliegenden Beispiel sinusstrukturiert, jedoch könnten genauso gut Dreieckswellungen oder andere Strukturen vorliegen. Das Haftmittel wird durch die Mittel 4 zum Auftragen von Haftmittel auf die zumindest teilweise strukturierte Lage 1 aufgetragen. Der Haftmittelauftrag erfolgt in Regionen, die benachbart zu Strukturextrema 2 sind. Wird nämlich ein Wabenkörper aus zumindest teilweise strukturierten Blechlagen 1 und ggf. im wesentlichen glatten Lagen 12 aufgebaut, so kommt es beim Wickeln bzw. Verwinden der Lagen 1, 12 zu einer Relativbewegung der Lagen 1, 12 zueinander. Dies führt zu einem Rutschen der zumindest teilweise strukturierten Lagen 1 auf den im wesentlichen glatten Lagen 12. Wäre nun Haftmittel direkt auf die Strukturextrema 2 aufgetragen, so würde dies die Gleitreibung zwischen der zumindest teilweise strukturierten Lage 1 und der im wesentlichen glatten Lage 12 erhöhen und so das Wickeln bzw. Verwinden erschweren. Jedoch müssen zumindest teilweise strukturierte Lagen 1 und im wesentlichen glatte Lagen 12 zum Aufbau eines erfindungsgemäßen Wabenkörpers miteinander verbunden werden. Dies erfolgt oftmals durch ein Verlöten, genauer ein Hartlöten, der Lagen miteinander. Das Verlöten erfolgt im Bereich der Strukturextrema 2, so dass sich bei Kontakt zwischen der zumindest teilweise strukturierten Lage 1 und der im wesentlichen glatten Lage 12 auf beiden Seiten des Strukturextremums 2 im wesentlichen dreieckige Lötzwickel ausbilden. D. h. es ist ein Lotauftrag im Bereich der Strukturextrema 2 erforderlich, um eine Verbindung zwischen der zumindest teilweise strukturierten Lage 1 und der im wesentlichen glatten Lage 12 zu erreichen. Deshalb liegt einer der großen Vorteile der vorliegenden Erfindung darin, dass ein Haftmittelauftrag direkt benachbart zu den Stnikturextrema 2 erfolgen kann. Dies bedingt, dass einerseits die Gleitreibung zwischen den Lagen 1, 12 beim Wickeln bzw. Verwinden reduziert ist und andererseits ein Lotmittelauftrag im Bereich der Strukturextrema erfolgen kann. So kann eine dauerhafte und qualitativ hochwertige Verbindung der Lagen 1, 12 untereinander hergestellt werden, ohne dass das Wickeln bzw. Verwinden erschwert wäre. Hierzu erfolgt der Haftmittelauftrag in erfindungsgemäßer Weise direkt benachbart zu den Strukturextrema 2.

Fig. 5 zeigt exemplarisch zwei verbundene Lagen 1, 12. Hierbei ist eine zumindest teilweise strukturierte Lage 1 mit einer im wesentlichen glatten Lage 12 verbunden. Die zumindest teilweise strukturierte Lage 1 weist Strukturextrema 2 auf, an denen die zumindest teilweise strukturierte Lage 1 an der im wesentlichen glatten Lage 12 anliegt. Durch das erfindungsgemäße Verfahren wurden Lötzwickel 23 ausgebildet, die die zumindest teilweise strukturierte Lage 1 mit der im wesentlichen glatten Lage 12 verbinden.

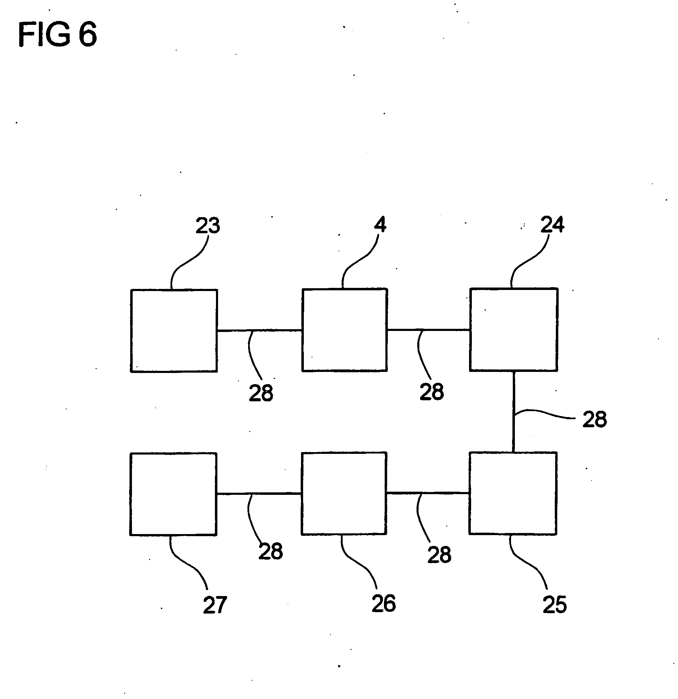

Fig. 6 zeigt schematisch einen Aufbau einer Vorrichtung zur Herstellung von Wabenkörpern. Fig. 6 zeigt Mittel 23 zum Bereitstellen von mindestens einer zumindest teilweise strukturierten metallischen Lage und ggf. von mindestens einer im wesentlichen glatten metallischen Lage. Diese Mittel können beispielsweise das Abwickeln und Abtrennen, sowie ggf. Strukturieren von Blechlagen von Coils von glatten Blechfolien durchführen oder auch entsprechend Fasermaterial konfektionieren, also zumindest in einer bestimmten Länge bereitstellen und ggf. Strukturieren. Diese Mittel 23 stellen die benötigten zumindest teilweise strukturierten Lagen oder auch ggf. im wesentlichen glatte Lagen zur Verfugung. Hierbei können die Mittel Strukturierungsmittel aufweisen, die nicht gezeigt sind, durch die aus einer Glattlage, die beispielsweise von einem Coil abgewickelt wird, eine im wesentlichen strukturierte Lage erzeugt wird. Weiterhin können Mikrostrukturiermittel ausgebildet sein, die Milcrostrukturen in der im wesentlichen glatten Lage ausbilden.

Nach den Mitteln 23 zum Bereitstellen von Lagen sind Mittel 4 zum Auftragen von Haftmittel ausgebildet. In Bezug auf die Mittel 4 zum Auftragen von Haftmittel wird auf die oben angegebene Beschreibung verwiesen. An die Mittel 4 zum Auftragen von Haftmittel schließen sich Stapelmittel 24 an, in denen Stapel aus im wesentlichen glatten und zumindest teilweise strukturierten Blechlagen ausgebildet werden. An die Stapelmittel 24 schließen sich Verwindungsmittel 25 an, in denen einer oder mehrere in den Stapelmittel 24 hergestellte Stapel miteinander verwunden werden. So können beispielsweise Wabenkörper hergestellt werden, die eine S- oder Evolventenform aufweisen. Genauso gut ist es auch möglich, keine Stapelmittel 24 auszubilden und statt dessen eine zumindest teilweise strukturierte Lage oder auch mehrere zumindest teilweise strukturierte und im wesentlichen glatte Lagen aufzuwickeln, beispielsweise zu einem spiralförmigen Wabenkörper.

An die Verwindungsmittel 25 schließen sich Belotungsmittel 26 an, in denen pulverförmiges Lot in den gewickelten Wabenkörper eingebracht wird. An die Belotungsmittel schließen sich Behandlungsmittel 27 an, in denen eine thermische Behandlung vorgenommen wird, bei der das eingebrachte Lot aufschmilzt und die Lagen 1,12 miteinander verbindet. Die einzelnen Mittel 23, 4, 24, 25, 26, 27 sind durch Verbindungsmittel 28 miteinander verbunden, die einen Transport der Rohprodukte von einem Mittel zum nächsten ermöglichen. Im vorliegenden Beispiel erfolgt das Auftragen von Lot in den Belotungsmitteln 26 nach dem Stapeln und Verwinden in den Stapelmitteln 24 und Verwindungsmitteln 25. Es ist jedoch genauso gut möglich und erfindungsgemäß, das Auftragen des pulverförmigen Lotmaterials vor dem Stapeln bzw. Verwinden vorzunehmen.

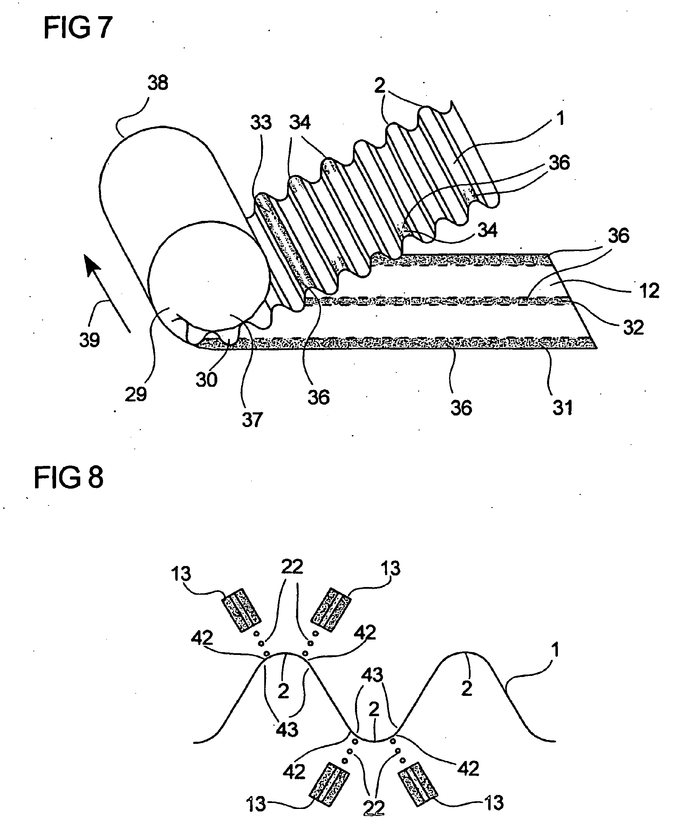

Fig. 7 zeigt am Beispiel eines spiralig gewickelten Wabenkörpers verschiedene Möglichkeiten des Auftrags von Haftmittel 36, die mittels des erfindungsgemäßen Verfahrens möglich sind. Der spiralig gewickelte Wabenkörper 29 ist aus einer zumindest teilweise strukturierten Lage 1 und einer im wesentlichen glatten Lage 12 spiralförmig aufgewickelt. Der Wabenkörper 29 weist Kanäle 30 auf, die sich durch den Wabenkörper 29 erstrecken. Der Wabenkörper 29 kann von einer ersten Stirnseite 37 zu einer zweiten Stirnseite 38 in einer Strömungsrichtung 39 durchströmt werden. Fig. 7 zeigt verschiedene Möglichkeiten, wie nach dem erfindungsgemäßen Verfahren ein Haftmittelauftrag sowohl auf die zumindest teilweise strukturierte Lage 1, als auch auf die im wesentlichen glatte Lage 12 erfolgen kann. Beispielsweise kann das Haftmittel 36 als stirnseitiger Haftmittelstreifen 31 aufgetragen werden oder auch als innenliegender Haftmittelstreifen 32. Beim Auftrag des Haftmittels 36 sowohl auf die auf die zumindest teilweise strukturierte Lage 1, als auch auf die im wesentlichen glatte Lage 12 können durchgehende Haftmittelstreifen 33 ausgebildet werden. Hierbei ist es besonders bevorzugt, diese direkt benachbart zu den Strukturextrema 2 der zumindest teilweise strukturierten Lage 1 auszubilden. Hierbei wird der Bereich der Struktur, der dem Strukturextremum 2 entspricht, nicht mit Haftmittel 36 versehen. Weiterhin ist es möglich, nur Teilbereiche der zumindest teilweise strukturierten Lage 1 mit Haftmittel zu versehen. Hierbei können Teilbereiche 34 in Strömungsrichtung mit Haftmittel 36 ausgebildet werden, die sowohl stümseitig als auch innenliegend ausgebildet sein können. So können auch pro Struktur mehrere Bereiche mit Haftmittel 36 ausgebildet sein. Bei all diesen Beispielen erfolgt der Haftmittelauftrag erfindungsgemäß in Form von Tropfen, bevorzugt in Form eines Tropfenstrahls, besonders bevorzugt mittels einer Druckeinrichtung wie beispielsweise einer Continuous-Inkjet-Druckeinrichtung.

An den Teilbereichen 31, 32, 33, 34, auf denen Haftmittel 36 aufgebracht wurde, bleibt bei einer späteren Aufbringung von Lotpulver dieses haften, so dass in diesen Teilbereichen 31, 32, 33, 34 eine Verbindung der Lagen 1, 12 miteinander erfolgt.

Fig. 8 zeigt ein weiteres Beispiel für eine vorteilhafte Ausgestaltung des erfindungsgemäßen Verfahrens. Hier wird auf eine zumindest teilweise strukturierte Lage 1 Haftmittel in Form von Haftmitteltropfen 22 aufgetragen. Hierbei erfolgt der Haftmittelauftrag im wesentlichen senkrecht zur Oberfläche 42 der mit Haftmittel 36 zu versehenden Teilbereiche 43. Das heißt, der Haftmittelauftrag erfolgt in einer Richtung, die im wesentlichen der Flächennormalen der mit Haftmittel zu versehenden Oberfläche 42 ist. Dies geschieht durch eine entsprechende Justierung der Druckeinrichtungen 13. Die mit Haftmittel 36 zu versehenden Teilbereiche 42 liegen benachbart zu den Strukturextrema 2.

Das erfindungsgemäße Verfahren und die erfindungsgemäße Vorrichtung zur Herstellung von Wabenkörpern 29 erlauben es in vorteilhafter Weise, sehr präzise Haftmittel 36 auf die Bereiche aufzutragen, in denen später eine Verbindung mit benachbarten Lagen erfolgen soll. Besonders bevorzugt ist hierbei das Auftragen von Haftmittel 36 mittels einer Drucktechnik, insbesondere auch auf die Flankenbereiche, die einem Strukturextremum 2 direkt benachbart sind. Dadurch ist es bevorzugt möglich, das Strukturextremum 2 von Haftmittel 36 freizuhalten, so dass ein späteres Wickeln bzw. Verwinden der Lagen 1, 12 leichter durchzuführen ist. Mit dem erfindungsgemäßen Verfahren und der erfindungsgemäßen Vorrichtung ist es möglich, Wabenkörper 29 auszubilden, die eine über die Strömungsrichtung 39 und/oder im wesentlichen quer zur Strömungsrichtung 39 inhomogene Flexibilität aufweisen.

### Bezugszeichenliste

- 1: zumindest teilweise strukturierte Lage
- 2: Strukturextremum
- 3: Bewegungsrichtung
- 4: Mittel zum Auftragen von Haftmittel
- 5: piezoelektrisches Element
- 6: Düse
- 7: Auflademittel
- 8: Ablenkmittel
- 9: Auffangmittel
- 10: Haftmittelpunkt
- 11: Haftmittelstrich
- 12: im wesentlichen glatte Lage
- 13: Druckeinrichtung
- 14: Schwingungsrichtung
- 15: Hochdruckpumpe
- 16: Haftmittelreservoir
- 17: Querrichtung
- 18: Rückführmittel
- 19: Filter
- 20: Kontakt
- 21: Zuführleitung
- 22: Haftmitteltropfen
- 23: Mittel zum Bereitstellen von Lagen
- 24: Stapelmittel
- 25: Verwindungsmittel
- 26: Belotungsmittel
- 27: Behandlungsmittel
- 28: Verwindungsmittel
- 29: Wabenkörper
- 30: Kanal
- 31: stirnseitiger Haftmittelstreifen
- 32: innenliegender Haftmittelstreifen
- 33: durchgehender Haftmittelstreifen
- 34: Teilbereich
- 35: Tropfenstrahl
- 36: Haftmittel
- 37: erste Stirnseite
- 38: zweite Stirnseite
- 39: Strömungsrichtung
- 40: Zuleitungsmittel
- 41: Auftragrichtung
- 42: Oberfläche
- 43: Teilbereich

## Patentansprüche

1. Verfahren zur Herstellung eines Wabenkörpers (29) aus Lagen (1, 12), bevorzugt zumindest teilweise metallischen Lagen, umfassend die folgenden Schritte:
a) Bereitstellen von mindestens einer zumindest teilweise strukturierten Lage (1) mit Strukturextrema (2) und gegebenenfalls von mindestens einer im wesentlichen glatten Lage (12);
b) Auftragen von Haftmittel (36) zumindest auf wenigstens einen Teilbereich (10, 11, 31, 32, 33, 34, 43) der im wesentlichen glatten (12) und/oder der zumindest teilweise strukturierten Lage (1);
c) Herstellung eines Wabenkörpers;
e) Durchführung eines thermischen Behandlungsschrittes,
wobei die Lage mit einem Lotmaterial versehen wird, welches im wesentlichen an den mit Haftmittel (36) versehenen Teilbereichen (10, 11, 31, 32, 33, 34, 43) der Lagen (1, 12) haften bleibt und das Haftmittel (36) in Tropfenform (22, 35) augetragen wird, **dadurch gekennzeichnet, dass** die Haftmitteltropfen (10, 22) auf der Lage (1, 12) einen mittleren Durchmesser von 0,05 bis 0,7 mm, bevorzugt von 0,1 bis 0,4 mm, besonders bevorzugt von 0,1 bis 0,3 mm aufweisen und die Teilbereiche (10, 11, 31, 32, 33, 34, 43) benachbart zu mindestens einem Strukturextremum (2) von einer Mehrzahl von Strukturextrema (2) angeordnet sind und auf dem Strukturextremum (2) selbst kein Haftmittelauftrag erfolgt.

2. Verfahren nach Anspruch 1, **dadurch gekennzeichnet, dass** der Schritt c) das Stapeln mindestens einer zumindest teilweise strukturierten (1) und mindestens einer im wesentlichen glatten Lage (12) zu mindestens einem Stapel umfasst.

3. Verfahren nach Anspruch 2, **dadurch gekennzeichnet, dass** ein Schritt d) das Verwinden des mindestens einen Stapels von Lagen (1, 12) und/oder Aufwickeln mindestens einer zumindest teilweise strukturierten Lage (1) und gegebenenfalls mindestens einer im wesentlichen glatten Lage (12) zu einem Wabenkörper (29) umfasst.

4. Verfahren nach einem der vorhergehenden Ansprüche, **dadurch gekennzeichnet, dass** der Wabenkörper (29) nach Schritt b) und vor Schritt e) mit pulverförmigem Lotmaterial versehen wird.

5. Verfahren nach einem der vorhergehenden Ansprüche, **dadurch gekennzeichnet, dass** das Haftmittel (36) auf der zumindest teilweise strukturierten Lage (1) im Bereich der Flanken der Strukturierungen beidseits und, nah einem Strukturextremum (2), aufgetragen wird.

6. Verfahren nach einem der vorhergehenden Ansprüche, **dadurch gekennzeichnet, dass** das Haftmittel (36) linienartig mit einer Breite von 0,05 bis 0,7 mm, bevorzugt von 0,1 bis 0,4 mm und besonders bevorzugt von 0,1 bis 0,3 mm aufgetragen wird.

7. Verfahren nach einem der vorhergehenden Ansprüche, **dadurch gekennzeichnet, dass** das Haftmittel (36) aufgedruckt wird.

8. Verfahren nach einem der vorhergehenden Ansprüche, **dadurch gekennzeichnet, dass** das Auftragen des Haftmittels (36) nach einem Drop-on-Demand-Verfahren erfolgt.

9. Verfahren nach einem der Ansprüche 1 bis 7, **dadurch gekennzeichnet, dass** das Auftragen des Haftmittels (26) nach einem Bubble-Jet-Verfahren erfolgt.

10. Verfahren nach einem der Ansprüche 1 bis 7, **dadurch gekennzeichnet, dass** das Auftragen des Haftmittels (36) nach dem Continuous-Inkjet-Verfahren erfolgt.

11. Verfahren nach einem der vorhergehenden Ansprüche, **dadurch gekennzeichnet, dass** das Haftmittel (36) durch eine Düse (6) appliziert wird, welche impulsangeregt wird.

12. Verfahren nach einem der vorhergehenden Ansprüche, **dadurch gekennzeichnet, dass** das Haftmittel (36) durch eine Düse (6) appliziert wird, welche zu hochfrequenten Schwingungen angeregt wird.

13. Verfahren nach Anspruch 11 oder 12, **dadurch gekennzeichnet, dass** das Haftmittel in der Düse (6) einen Druck von mehr als 2 bar, bevorzugt mehr als 2,5 bar aufweist.

14. Verfahren nach einem der Ansprüche 11 bis 13, **dadurch gekennzeichnet, dass** die Anregung der Düse (6) mittels eines piezoelektrischen Elements (5) erfolgt.

15. Verfahren nach einem der Ansprüche 12 bis 14, **dadurch gekennzeichnet, dass** die Anregung bei einer Frequenz von mindestens 50 kHz, bevorzugt mindestens 60 kHz, besonders bevorzugt mindestens 100 kHz erfolgt.

16. Verfahren nach einem der vorhergehenden Ansprüche, **dadurch gekennzeichnet, dass** die Haftmitteltropfen (22, 35) elektrostatisch aufgeladen und elektrostatisch abgelenkt werden.

17. Verfahren nach Anspruch 16, **dadurch gekennzeichnet, dass** Haftmitteltropfen (22, 35), die nicht auf die Lagen (1, 12) aufgetragen werden sollen, elektrostatisch in ein Auffangmittel (9) gelenkt und rückgefüht werden.

18. Verfahren nach Anspruch 16 oder 17, **dadurch gekennzeichnet, dass** die Positionierung des Haftmittels (36) auf den Lagen (1, 12) zumindest zum Teil durch eine gezielte elektrostatische Ablenkung der Haftmitteltropfen (22, 35) vor Auftreffen auf die Lagen (1, 12) erreicht wird.

19. Verfahren nach einem der Ansprüche 1 bis 9, **dadurch gekennzeichnet, dass** die Haftmitteltropfen (22) durch kurzzeitiges Erhitzen des Haftmittels (35) über dessen Siedepunkt in einer Düse (6) erzeugt werden.

20. Verfahren nach einem der vorhergehenden Ansprüche, **dadurch gekennzeichnet, dass** zumindest ein Teil der Lagen (1, 12) als metallische Lagen, bevorzugt Blechlagen und/oder metallische Faserlagen ausgebildet sind.

21. Verfahren nach einem der vorhergehenden Ansprüche, **dadurch gekennzeichnet, dass** zumindest ein Teil der Lagen (1, 12) aus Kompositmaterial, bevorzugt einem Kompositmaterial aus keramischen Fasern und metallischem Material, bevorzugt metallischen Fasern und/oder Blechlagen, ausgebildet ist.

22. Verfahren nach einem der vorhergehenden Ansprüche, **dadurch gekennzeichnet, dass** das Auftragen des Haftmittels (36) bevorzugt in einer Auftragrichtung (41) erfolgt, die im wesentlichen senkrecht zur Bewegungsrichtung (3) der Lagen (1,12) ist.

23. Verfahren nach einem der vorhergehenden Ansprüche, **dadurch gekennzeichnet, dass** das Auftragen des Haftmittels (36) bevorzugt in einer Auftragsrichtung (41) erfolgt, die im wesentlichen senkrecht zu einer Oberfläche (42) des wenigstens einen mit Haftmittel (36) zu versehenden Teilbereichs (10, 11, 31, 32, 33, 34, 43) ist.

24. Vorrichtung zum Herstellen von Wabenkörper (29), umfassend zumindest die folgenden Komponenten:
a) Mittel (23) zum Bereitstellen von mindestens einer zumindest teilweise strukturierten Lage (1) mit Strukturextrema (2) und gegebenenfalls von mindestens einer im wesentlichen glatten Lage (12);
b) Mittel (4) zum Auftragen von Haftmittel (36) zumindest auf wenigstens einen Teilbereich (10, 11, 31, 32, 33, 34, 43) der im wesentlichen glatten (12) und/oder der zumindest teilweise strukturierten Lage (1);
c) Mittel zur Generierung eines Wabenkörpers (29);
e) Belotungsmittel (26), mittels derer der Wabenkörper (29) mit Lot versehen werden kann, welches im wesentlichen an den mit Haftmittel (36) versehen Bereichen (10, 11, 31, 32, 33, 34, 43) haften bleibt; und
f) Behandlungsmittel (27) zur Durchführung eines thermischen Behandlungsschrittes,
**dadurch gekennzeichnet, dass** die Mittel (4) zum Auftragen eines Haftmittels (36) mindestens eine Druckeinrichtung (13) zum Aufdrucken des Haftmittels (36) auf Teilbereiche (10, 11, 31, 32, 33, 34) der Lage (1, 12), ein Haftmittelreservoir (16) und Zuleitungsmittel (40) für die Zuleitung von Haftmittel (36) zur Druckeinrichtung (13) umfassen, und dass die Mittel (4) zum Auftragen dazu geeignet sind, das Haftmittel (36) benachbart zu Strukturextrema (2) der zumindest teilweise strukturierten Lage (1) aufzutragen, wobei auf den Strukturextrema (2) selbst kein Haftmittelauftrag erfolgt.

25. Vorrichtung nach Anspruch 24, **dadurch gekennzeichnet, dass** die Komponente c) Stapelmittel (24) umfasst, mit denen mindestens eine zumindest teilweise strukturierte (1) und mindestens eine im wesentlichen glatten Lage (12) zu mindestens einem Stapel gestapelt werden.

26. Vorrichtung nach Anspruch 25, **dadurch gekennzeichnet, dass** eine Komponente d) Verwindungsmittel zum Verwinden des mindestens einen Stapels von metallischen Lagen (1, 12) und/oder Aufwickelmittel zum Aufwickeln mindestens einer zumindest teilweise strukturierten Lage (1) und gegebenenfalls mindestens einer im wesentlichen glatten Lage (12) zu einem Wabenkörper (29) umfasst.

27. Vorrichtung nach einem der Ansprüche 24 bis 26, **dadurch gekennzeichnet, dass** die Druckeinrichtung (13) eine Drop-on-Demand-Druckeinrichtung ist.

28. Vorrichtung nach einem der Ansprüche 24 bis 27, **dadurch gekennzeichnet, dass** die Druckeinrichtung (13) eine Bubble-Jet-Druckeinrichtung ist.

29. Vorrichtung nach einem der Ansprüche 24 bis 26, **dadurch gekennzeichnet, dass** die Druckeinrichtung (13) eine Continuous-Inkjet-Druckeinrichtung ist.

30. Vorrichtung nach einem der Ansprüche 24 bis 29, **dadurch gekennzeichnet, dass** die Druckeinrichtung (13) eine Düse (6) zum Auftragen des Haftmittels (36) aufweist, die zu hochfrequenten oder impulsartigen Schwingungen anregbar ist.

31. Vorrichtung nach Anspruch 30, **dadurch gekennzeichnet, dass** die Düse (6) ein piezoelektrisches Element (5) aufweist.

32. Vorrichtung nach einem der Ansprüche 24 bis 31, **dadurch gekennzeichnet, dass** die Druckeinrichtung (13) Auflademittel (7) zur elektrostatischen Aufladung des Haftmittels (36) und Ablenkmittel (8) zur Ablenkung des Haftmittels (36) aufweist.

33. Vorrichtung nach Anspruch 32, **dadurch gekennzeichnet, dass** die Mittel (4) zum Auftragen von Haftmittel (36) Auffangmittel (9) zum Auffangen nicht aufgetragenen Haftmittels (36) umfassen.

34. Vorrichtung nach Anspruch 33, **dadurch gekennzeichnet, dass** die Mittel (4) zum Auftragen von Haftmittel (36) Rückfuhrmittel (18) umfassen, die das in den Auffangmitteln (9) aufgefangene Haftmittel (36) zum Haftmittelreservoir (16) zurückführen.

## Claims

1. A method for producing a honeycomb body (29) from layers (1, 12), pref erably at least partially metallic layers, comprising the following steps:
a) providing at least one at least partially structured layer (1) having structure extrema (2) and if appropriate at least one substantially smooth layer (12);
b) applying bonding agent (36) at least to at least one subregion (10, 11, 31, 32, 33, 34, 43) of the substantially smooth layer (12) and/or of the at least partially structured layer (1);
c) producing a honeycomb body;
e) carrying out a heat treatment step,
the layer being provided with a brazing material which continues to adhere substantially to the subregions (10, 11, 31, 32, 33, 34, 43) of the layers (1, 12) which have been provided with bonding agent (36), which is applied in drop form (22, 35), **characterized in that** the bonding agent drops (10, 22) on the layer (1, 12) have a mean diameter of from 0.05 to 0.7 mm, preferably from 0.1 to 0.4 mm, particularly preferably from 0.1 to 0.3 mm and the subregions (10, 11, 31, 32, 33, 34, 43) are arranged adjacent to at least one structure extremum (2) of a plurality of structure extrema (2) and no bonding agent application is been carried out on the structure extremum (2) itself.

2. The method as claimed in claim 1, **characterized in that** step c) comprises the stacking of at least one at least partially structured layer (1) and at least one substantially smooth layer (12) to form at least one stack.

3. The method as claimed in claim 2, **characterized in that** a step d) comprises the intertwining of the at least one stack of layers (1, 12) and/or the winding-up of at least one at least partially structured layer (1) and if appropriate at least one substantially smooth layer (12) to form a honeycomb body (29).

4. The method as claimed in one of the preceding claims, **characterized in that** the honeycomb body (29) is provided with brazing material in powder form after step b) and before step e).

5. The method as claimed in one of the preceding claims, **characterized in that** the bonding agent (36) is applied to the at least partially structured layer (1) in the region of the flanks of the structures, on both sides and near to a structure extremum (2).

6. The method as claimed in one of the preceding claims, **characterized in that** the bonding agent (36) is applied in line shape with a width from 0.05 to 0.7 mm, preferably from 0.1 to 0.4 mm, particularly preferably from 0.1 to 0.3 mm.

7. The method as claimed in one of the preceding claims, **characterized in that** the bonding agent (36) is printed on.

8. The method as claimed in one of the preceding claims, **characterized in that** the bonding agent (36) is applied using a drop-on-demand process.

9. The method as claimed in one of claims 1 to 7, **characterized in that** the bonding agent (26) is applied using a bubble-jet process.

10. The method as claimed in one of claims 1 to 7, **characterized in that** the bonding agent (36) is applied using the continuous-inkjet process.

11. The method as claimed in one of the preceding claims, **characterized in that** the bonding agent (36) is applied through a nozzle (6) which is pulse-excited.

12. The method as claimed in one of the preceding claims, **characterized in that** the bonding agent (36) is applied through a nozzle (6) which is excited into high-frequency oscillations.

13. The method as claimed in claim 11 or 12, **characterized in that** the bonding agent is at a pressure of more than 2 bar, preferably more than 2.5 bar, in the nozzle (6).

14. The method as claimed in one of claims 11 to 13, **characterized in that** the excitation of the nozzle (6) is effected by means of a piezoelectric element (5).

15. The method as claimed in one of claims 12 to 14, **characterized in that** the excitation takes place at a frequency of at least 50 kHz, preferably at least 60 kHz, particularly preferably at least 100 kHz.

16. The method as claimed in one of the preceding claims, **characterized in that** the bonding agent drops (22, 35) are electrostatically charged and electrostatically deflected.

17. The method as claimed in claim 16, **characterized in that** bonding agent drops (22, 35) which are not to be applied to the layers (1, 12) are electrostatically diverted into a collection means (9) and recycled.

18. The method as claimed in claim 16 or 17, **characterized in that** the positioning of the bonding agent (36) on the layers (1, 12) is at least partially achieved by specific electrostatic deflection of the bonding agent drops (22, 35) before they strike the layers (1, 12).

19. The method as claimed in one of claims 1 to 9, **characterized in that** the bonding agent drops (22) are generated by briefly heating the bonding agent (35) above its boiling point in a nozzle (6).

20. The method as claimed in one of the preceding claims, **characterized in that** at least some of the layers (1, 12) are formed as metallic layers, preferably sheet-metal layers and/or metallic fiber layers.

21. The method as claimed in one of the preceding claims, **characterized in that** at least some of the layers (1, 12) are formed from composite material, preferably a composite material comprising ceramic fibers and metallic material, preferably metallic fibers and/or sheet-metal layers.

22. The method as claimed in one of the preceding claims, **characterized in that** the application of the bonding agent (36) preferably takes place in an application direction (41) which is substantially perpendicular to the direction of movement (3) of the layers (1, 12).

23. The method as claimed in one of the preceding claims, **characterized in that** the application of the bonding agent (36) preferably takes place in an application direction (41) which is substantially perpendicular to a surface (42) of the at least one subregion (10, 11, 31, 32, 33, 34, 43) that is to be provided with bonding agent (36).

24. An apparatus for producing honeycomb body (29), comprising at least the following components:
a) means (23) for providing at least one at least partially structured layer (1) having structure extrema (2) and if appropriate at least one substantially smooth layer (12);
b) means (4) for applying bonding agent (36) at least to at least one subregion (10, 11, 31, 32, 33, 34, 43) of the substantially smooth layer (12) and/or of the at least partially structured layer (1);
c) means for generating a honeycomb body (29);
e) brazing material application means (26), by means of which the honeycomb body (29) can be provided with brazing material which adheres substantially to the regions (10, 11, 31, 32, 33, 34, 43) which have been provided with bonding agent (36); and
f) treatment means (27) for carrying out a heat treatment step,
**characterized in that** the means (4) for applying a bonding agent (36) comprise at least one printing device (13) for printing the bonding agent (36) onto subregions (10, 11, 31, 32, 33, 34) of the layer (1, 12), a bonding agent reservoir (16) and feed means (40) for feeding bonding agent (36) to the printing device (13) and that the means (4) are suitable for applying the bonding agent (36) adjacent to structure extrema (2) of the at least partially structured layer (1), whereby no bonding agent application is been carried out on the structure extrema (2) themselves.

25. The apparatus as claimed in claim 24, **characterized in that** the component c) comprises stacking means (24), by which at least one at least partially structured layer (1) and at least one substantially smooth layer (12) are stacked to form at least one stack.

26. The apparatus as claimed in claim 25, **characterized in that** a component d) comprises intertwining means for intertwining the at least one stack of metallic layers (1, 12) and/or winding-up means for winding up at least one at least partially structured layer (1) and if appropriate at least one substantially smooth layer (12) to form a honeycomb body (29).

27. The apparatus as claimed in one of claims 24 to 26, **characterized in that** the printing device (13) is a drop-on-demand printing device.

28. The apparatus as claimed in one of claims 24 to 27, **characterized in that** the printing device (13) is a bubble-jet printing device.

29. The apparatus as claimed in one of claims 24 to 26, **characterized in that** the printing device (13) is a continuous-inkjet printing device.

30. The apparatus as claimed in one of claims 24 to 29, **characterized in that** the printing device (13) has a nozzle (6) for applying the bonding agent (36), which can be excited into high-frequency or pulse-like oscillations.

31. The apparatus as claimed in claim 30, **characterized in that** the nozzle (6) has a piezoelectric element (5).

32. The apparatus as claimed in one of claims 24 to 31, **characterized in that** the printing device (13) has charging means (7) for electrostatically charging the bonding agent (36) and deflecting means (8) for deflecting the bonding agent (36).

33. The apparatus as claimed in claim 32, **characterized in that** the means (4) for applying bonding agent (36) comprise collection means (9) for collecting bonding agent (36) that has not been applied.

34. The apparatus as claimed in claim 33, **characterized in that** the means (4) for applying bonding agent (36) comprise recycling means (18) which return the bonding agent (36) which has been collected in the collection means (9) to the bonding agent reservoir (16).

## Revendications

1. Procédé de fabrication d'un corps en nids d'abeilles (29) à partir de couches (1, 12), de préférence des couches au moins partiellement métalliques, comprenant les étapes suivantes :
a) Mise à disposition d'au moins une couche (1) au moins partiellement structurée avec des extrema de structure (2) et le cas échéant, d'au moins une couche sensiblement lisse (12) ;
b) application d'adhésif (36) au moins sur au moins une région partielle (10, 11, 31, 32, 33, 34, 43) de la couche sensiblement lisse (12) et/ou de la couche au moins partiellement structurée (1) ;
c) fabrication d'un corps en nids d'abeilles ;
e) mise en oeuvre d'une étape de traitement thermique, la couche étant pourvue d'un matériau à braser, lequel reste adhéré sensiblement sur les régions partielles (10, 11, 31, 32, 33, 34, 43) des couches (1, 12), lesquelles régions partielles étant pourvues d'adhésif (36) et l'adhésif (36) étant appliqué en forme de gouttes (22, 35),
**caractérisé en ce que** les gouttes d'adhésif (10, 22) ont sur la couche (1, 2) un diamètre moyen de 0,05 à 0,7 mm, de préférence de 0,1 à 0,4 mm, particulièrement préféré de 0,1 à 0,3 mm et les régions partielles (10, 11, 31, 32, 33, 34, 43) sont agencées de manière adjacente d'au moins un extremum de structure (2) d'une pluralité d'extrema de structure (2) et que sur l'extremum de structure (2) lui-même une application d'adhésif n'est pas effectuée.

2. Procédé selon la revendication 1, **caractérisé en ce que** l'étape c) comprend l'empilage d'au moins une couche au moins partiellement structurée (1) et d'au moins une couche (12) sensiblement lisse en au moins une pile.

3. Procédé selon la revendication 2, **caractérisé en ce qu'**une étape d) comprend le chantournage de l'au moins une pile de couches (1, 12) et/ou l'enroulement d'au moins une couche au moins partiellement structurée (1) et le cas échéant, d'au moins une couche sensiblement lisse (12) en un corps en nids d'abeilles (29).

4. Procédé selon l'une des revendications précédentes, **caractérisé en ce que** le corps en nids d'abeilles (29) est pourvu de matériau à braser en forme de poudre après l'étape b) et avant l'étape e).

5. Procédé selon l'une des revendications précédentes, **caractérisé en ce que** l'adhésif (36) est appliqué sur la couche au moins partiellement structurée (1) dans la région des flancs des structurations de part et d'autre et à proximité d'un extremum de structure (2).

6. Procédé selon l'une des revendications précédentes, **caractérisé en ce que** l'adhésif (36) est appliqué à la façon de lignes avec une largeur de 0,05 à 0,7 mm, de préférence de 0,1 à 0,4 mm et particulièrement préféré de 0,1 à 0,3 mm.

7. Procédé selon l'une des revendications précédentes, **caractérisé en ce que** l'adhésif (36) est imprimé.

8. Procédé selon l'une des revendications précédentes, **caractérisé en ce que** l'application de l'adhésif (36) est effectuée d'après un procédé de Drop-on-Demand

9. Procédé selon l'une des revendications 1 à 7, **caractérisé en ce que** l'application de l'adhésif est effectuée selon un procédé de bubble-jet.

10. Procédé selon l'une des revendications 1 à 7, **caractérisé en ce que** l'application de l'adhésif (36) est effectuée selon le procédé de Continuous Inkjet.

11. Procédé selon l'une des revendications précédentes, **caractérisé en ce que** l'adhésif (36) est appliqué par une buse (6), laquelle est excitée par impulsion.

12. Procédé selon l'une des revendications précédentes. **caractérisé en ce que** l'adhésif (36) est appliqué par une buse (6), laquelle est excitée jusqu'à des oscillations à fréquences élevées.

13. Procédé selon la revendication 11 ou 12, **caractérisé en ce que** l'adhésif a une pression de plus de 2 bar dans la buse (6), de préférence plus de 2, 5 bar.

14. Procédé selon l'une des revendications 11 à 13, **caractérisé en ce que** l'excitation de la buse (6) est effectuée à l'aide d'un élément piézoélectrique (5).

15. Procédé selon l'une des revendications 12 à 14, **caractérisé en ce que** l'excitation est effectuée à une fréquence d'au moins 50 kHz, de préférence d'au moins 60 kHz, particulièrement préféré d'au moins 100 kHz.

16. Procédé selon l'une des revendications précédentes, **caractérisé en ce que** les gouttes d'adhésif (22, 35) sont chargées de manière électrostatique et déviées de manière électrostatique.

17. Procédé selon la revendication 16, **caractérisé en ce que** des gouttes d'adhésif (22, 35) qui ne doivent pas être appliquées sur les couches (1, 12), sont dirigées de façon électrostatique dans un moyen de recueil (9) et sont recyclées.

18. Procédé selon la revendication 16 ou 17, **caractérisé en ce que** le positionnement de l'adhésif (36) sur les couches (1, 12) est obtenu au moins en partie par une déviation électrostatique ciblée des gouttes d'adhésif (22, 35) avant de rencontrer les couches (1, 12).

19. Procédé selon l'une des revendications 1 à 9, **caractérisé en ce que** les gouttes d'adhésif (22) sont générées par le réchauffement de courte durée de l'adhésif (35) au-delà de son point d'ébullition dans une buse (6).

20. Procédé selon l'une des revendications précédentes, **caractérisé en ce qu'**au moins une partie des couches (1, 12) sont formées comme couches métalliques, de préférence comme des couches de tôle et/ou des couches de filaments métalliques.

21. Procédé selon l'une des revendications précédentes, **caractérisé en ce qu'**au moins une partie des couches (1, 12) est formée de matériau composite, de préférence d'un matériau composite de fibres céramiques et de matériau métallique, de préférence de fibres métalliques et/ou de couches de tôle.

22. Procédé selon l'une des revendications précédentes, **caractérisé en ce que** l'application de l'adhésif (36) est effectuée de préférence dans un sens d'application (41) qui est sensiblement perpendiculaire par rapport au sens de mouvement (3) des couches (1, 12).

23. Procédé selon l'une des revendications précédentes, **caractérisé en ce que** l'application de l'adhésif (36) est effectuée de préférence dans un sens d'application (41) qui est sensiblement perpendiculaire à une surface (42) de l'au moins une région partielle (10, 11, 31, 32, 33, 34, 43) devant être pourvue d'adhésif (36).

24. Dispositif destiné à la fabrication de corps en nids d'abeilles (29), comprenant au moins les composants suivants :
a) des moyens (23) pour la mise à disposition d'au moins une couche au moins partiellement structurée (1) avec des extrema de structure (2) et le cas échéant, d'au moins une couche sensiblement lisse (12) ;
b) des moyens (4) pour l'application d'adhésif (36) au moins sur une région partielle (10, 11, 31, 32, 33, 34, 43) de la couche sensiblement lisse (12) et/ou de la couche au moins partiellement structurée (1) ;
c) des moyens pour la génération d'un corps en nids d'abeilles (29) ;
e) des moyens d'application de matériau de brasure (26), à l'aide desquels le corps en nids d'abeilles (29) peut être pourvu de brasure, laquelle reste adhérée sensiblement sur les régions (10, 11, 31, 32, 33, 34, 43) pourvues d'adhésif; et
f) des moyens de traitement (27) pour la mise en oeuvre d'une étape de traitement thermique,
**caractérisé en ce que** les moyens (4) pour appliquer un adhésif (36) comprennent au moins un dispositif d'imprimerie (13) pour imprimer l'adhésif (36) sur des régions partielles (10, 11, 31, 32, 33, 34, 43) de la couche (1, 12), un réservoir d'adhésif (16) et des moyens d'alimentation (40) pour alimenter de l'adhésif (36) jusqu'au dispositif d'imprimerie (13), et **en ce que** les moyens (4) pour l'application sont appropriés à appliquer l'adhésif (36) adjacent aux extrema de structure (2) de la couche au moins partiellement structurée (1), une application d'adhésif lui-même n'étant pas effectuée sur les extrema de structure (2).

25. Dispositif selon la revendication 24, **caractérisé en ce que** le composant c) comprend des moyens d'empilement (24), avec lesquels au moins une couche au moins partiellement structurée (1) et au moins une couche sensiblement lisse (12) sont empilées en au moins une pile.

26. Dispositif selon la revendication 25, **caractérisé en ce qu'**un composant d) comprend des moyens de chantournage pour chantourner l'au moins une pile de couches métalliques (1, 12) et/ou des moyens d'enroulement pour enrouler au moins une couche au moins partiellement structurée (1) et le cas échéant, au moins une couche sensiblement lisse (12) en un corps en nids d'abeilles (29).

27. Dispositif selon l'une des revendications 24 à 26, **caractérisé en ce que** le dispositif pour imprimer (13) est un dispositif de Drop-on-Demand.

28. Dispositif selon l'une des revendications 24 à 27, **caractérisé en ce que** le dispositif pour imprimer (13) est un dispositif d'Imprimerie de Bubble-Jet.

29. Dispositif selon l'une des revendications 24 à 26, **caractérisé en ce que** le dispositif pour imprimer (13) est un dispositif d'Imprimerie de Continuous-Inkjet.

30. Dispositif selon l'une des revendications 24 à 29, **caractérisé en ce que** le dispositif pour imprimer (13) a une buse (6) pour appliquer l'adhésif (36), qui peut être excitée à des oscillations de fréquence élevée ou à des oscillations du genre d'impulsions.

31. Dispositif selon la revendication 30, **caractérisé en ce que** la buse (6) a un élément piézoélectrique (5).

32. Dispositif selon l'une des revendications 24 à 31, **caractérisé en ce que** le dispositif pour imprimer (13) a des moyens de charge (7) pour charger de manière électrostatique l'adhésif (36) et des moyens de déviation (8) pour dévier l'adhésif (36).

33. Dispositif selon la revendication 32, **caractérisé en ce que** les moyens (4) pour appliquer de l'adhésif (36) comprennent des moyens de recueil (9) pour recueillir de l'adhésif (36) qui n'a pas été appliqué.

34. Dispositif selon la revendication 33, **caractérisé en ce que** les moyens (4) pour appliquer de l'adhésif (36) comprennent des moyens de recyclage (18) qui recyclent l'adhésif (36) recueilli dans les moyens de recueil (9) jusqu'au réservoir d'adhésif (16).
